(19) Europäisches Patentamt
European Patent Office
Office européen des brevets

(11) **EP 4 360 816 B1**

(12) **EUROPEAN PATENT SPECIFICATION**

(45) Date of publication and mention
of the grant of the patent:
**13.08.2025  Bulletin 2025/33**

(21) Application number: **23205740.6**

(22) Date of filing: **25.10.2023**

(51) International Patent Classification (IPC):
**B25J 9/14** (2006.01)      **B25J 9/16** (2006.01)
**B25J 18/02** (2006.01)     **B25J 18/06** (2006.01)
**B25J 19/00** (2006.01)     **B32B 27/12** (2006.01)
**D03D 3/02** (2006.01)

(52) Cooperative Patent Classification (CPC):
**B25J 9/142; B25J 9/1605; B25J 18/02;
B25J 18/06; B25J 19/007**

(54) **PROCESS FOR DESIGNING AND MANUFACTURING AN EVERTING SOFT ROBOT**

VERFAHREN ZUM ENTWERFEN UND HERSTELLEN EINES UMSTÜLPBAREN SOFT-ROBOTERS

PROCÉDÉ DE CONCEPTION ET DE FABRICATION D'UN ROBOT SOUPLE EN CROISSSANCE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **26.10.2022  IT 202200022116**

(43) Date of publication of application:
**01.05.2024  Bulletin 2024/18**

(73) Proprietor: **Herobots S.r.l.**
**80053 Castellammare di Stabia (NA) (IT)**

(72) Inventors:
• **Fontanelli, Giuseppe Andrea**
**80049 Somma Vesuviana (NA) (IT)**
• **Grazioso, Stanislao**
**80053 Castellammare di Stabia (NA) (IT)**
• **Selvaggio, Mario**
**80011 Acerra (NA) (IT)**
• **Sabella, Roberto**
**80020 Casavatore (NA) (IT)**
• **Fusco, Salvatore**
**80126 Napoli (NA) (IT)**
• **Lanzotti, Antonio**
**80129 Napoli (NA) (IT)**

(74) Representative: **Cardelli, Guido**
**c/o INGENIIS s.a.s. di B. Ciccarello e C.**
**Via Antonio De Berti, 24**
**00143 Roma (IT)**

(56) References cited:
WO-A1-2021/072295      WO-A1-2022/043670
US-A- 6 045 890          US-A1- 2019 143 539
US-B1- 6 171 424        US-B2- 10 954 789

• BLUMENSCHEIN LAURA H. ET AL: "Design,
Modeling, Control, and Application of Everting
Vine Robots", vol. 7, 10 October 2020
(2020-10-10), pages 548266, XP055971459,
Retrieved from the Internet <URL:https://www.
ncbi.nlm.nih.gov/pmc/articles/PMC7805729/pdf/
frobt-07-548266.pdf> DOI: 10.3389/
frobt.2020.548266
• ATAKA AHMAD ET AL: "Model-Based Pose
Control of Inflatable Eversion Robot With
Variable Stiffness", IEEE ROBOTICS AND
AUTOMATION LETTERS, IEEE, vol. 5, no. 2, 25
February 2020 (2020-02-25), pages 3398 - 3405,
XP011777813, DOI: 10.1109/LRA.2020.2976326

EP 4 360 816 B1

**Description**

The present invention concerns a process for designing and manufacturing of a soft robot with the ability to grow or a soft robot capable of everting according to a predefined path. An apparatus for its realization is also described.

The everting soft robots, as will be called in the following, are known also as growing soft robots, and are of the kind described in WO 2021/072295 A1. The pneumatically everting soft robots imitate plant-like growth by extending new material from their tip to navigate their environment.

As for US 10954789, this results in several advantages. First, there is no sliding friction between the growing body and its surroundings. Second, the body's power source can be stationary, and be located far from the robot body. Finally, a growing body does not need to apply forces to its immediate environment to move but can exploit contacts more proximal on the body. These characteristics mean a growing robot is less sensitive to the mechanical properties of its surroundings and make growth an appealing strategy for navigating a constrained, cluttered, or inhomogeneous environment.

WO 2022/043670 A1 describes a robotic device and a method of operating the same. Further, it discloses a process for designing and manufacturing an everting soft robot as described in the preamble of the enclosed claim 1.

US 2019/143539 A1 concerns a soft robotic linkage comprising first and second strip assemblies with first and second strip sections and different types of fibres that help distribute forces under pressure.

US 6171424 B1 describes a method of manufacturing fabric Venetian blinds. The equipment includes two different parts, a first part that creates strips of fabric in three portions and a second part that creates tubular bodies.

US 6045890 describes a cellular window panel, and a method and apparatus for making it. The equipment includes tension reels and rollers.

The present invention advances the art of robotics by providing mobility through growth.

An object of the present invention is to provide a tubular element configured to become a soft robot capable of growing by following pre-programmed straight or curved trajectories.

The subject is achieved by the invention that discloses a process for designing and manufacturing an everting soft robot, having a tubular structure formed by sections, the everting soft robot being capable of growing along a pre-programmed path, comprising the following steps:

- generation or reconstruction of the three-dimensional CAD model representing the environment in which the everting soft robot must navigate,
- identification of a starting point, an end point and obstacles to be overcome, avoided or exploited by the everting soft robot,
- generation of a path to reach the arrival point from the starting point avoiding the obstacles, the path including at least one of path straight segments, curvilinear segments and axial rotation segments,
- design of tubular structure straight sections, tubular structure curvilinear sections and tubular structure axial rotation sections corresponding to the straight segments, curvilinear segments and axial rotation segments, respectively,

and according to the invention:

- choice between a plurality of first fabric patches, second fabric patches, third fabric patches, and fourth fabric patches for each section of tubular structure,
- subjecting each fabric patch to its own state of traction deriving from its weaving,
- positioning or orienting each fabric patch in the tubular structure of the robot, and
- union of the plurality of fabric patches on the basis of said design of the sections, capable of providing a determined tubular structure rectilinear section, curvilinear section and axial rotation section, so that the everting soft robot is adequate to follow this path during its growth.

Further features and advantages of the invention will emerge more clearly from the description of an apparatus for the creation of a tubular structure for an everting soft robot, illustrated by way of an indicative and non-limiting example in the attached drawings in which:

- Figure 1 is a plan view of the path required for an everting soft robot according to the present invention;
- Figure 2 is a plan view of the everting soft robot according to the present invention in the path required to it in figure 1;
- Figure 3 represents a curved section of tubular structure of the everting soft robot in figure 2.
- Figure 4 is a perspective view of an example of a tubular structure for the everting soft robot in figure 2;
- Figure 5 is a schematic representation of four possible fabric patches with different weaving and pretension factor that can be used to create the tubular structure for an everting soft robot according to the present invention;
- Figure 6 is a schematic plan representation of an example of combination of three possible fabric patches in figure 5 that can be used to create the tubular structure for an everting soft robot according to the present invention;
- Figure 7 is an axonometric representation of the example of combination in figure 6 with joined lateral edges;

- Figure 8 is a schematic plan view showing an apparatus for the creation of a tubular structure for an everting soft robot according to the present invention; and
- Figure 9 is a side view, partially sectioned, of the apparatus in figure 1.

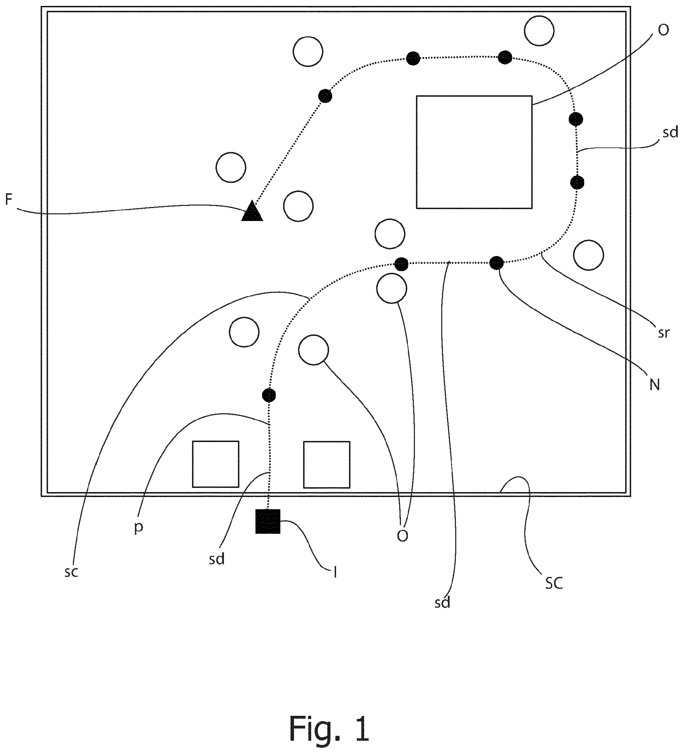

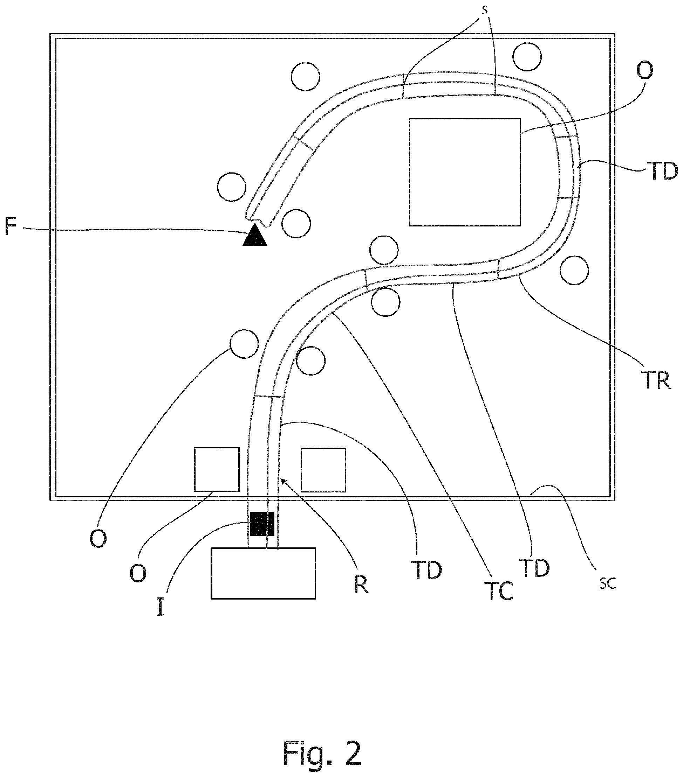

Reference can be made to figures 1 and 2, which are a plan view of the path required to an everting soft robot and, respectively, a plan view of the everting soft robot according to the present invention in the path required to it in figure 1.

Take the case that an everting soft robot must complete a path p, which is supposed between a starting point, or entry point I in a closed space SC, and a final or arrival point F. The path p extends between obstacles indicated with O. Black circles N indicate nodes where the path changes direction. The path p includes straight segments sd, curvilinear segments sc and axial rotation segments sr. It is understood that the rectilinear segments sd and the curvilinear segments sc develop in the plane, while the axial rotation segments sr instead serve to ensure that the robot rotates while it everts along its axis due to the applied pressure.

The straight path segments sd are defined by the length of the segment, the curvilinear path segments sc are defined by the length of the segment, the radius of curvature, and the normal to the plane in which the curve lies indicating the direction of curvature and the sense of the curve, and said axial rotation segments along the axial direction sr of path are defined by the length of the segment and the angle of rotation in space.

The object of the present invention is achieved if the everting soft robot R shown in figure 2 can be made to complete the path p in its growth. In figure 2 the same parts of figure 1 are indicated with the same numeral references, with the difference that the nodes N substantially correspond to the separation lines s between one section and the next one of the everting soft robot R in its use. In accordance with figure 1, the sections of the robot R include straight sections TD, curvilinear TC sections, and axial rotation TR sections, intended to cover the straight segments sd, the curvilinear segments sc and the axial rotation segments sr of the path p in figure 1.

The ability to pre-program the growth trajectory of the everting soft robot is based on the principle whereby by distributing, along the circumference of the everting soft robot, fabric patches having different elastic characteristics or being differently pretensioned, the trajectory followed by the robot during its growth is forced to compose straight segments, curved segments or sections with rotation about the axis of the cylinder that makes up the robot. The patches are flexible and airtight.

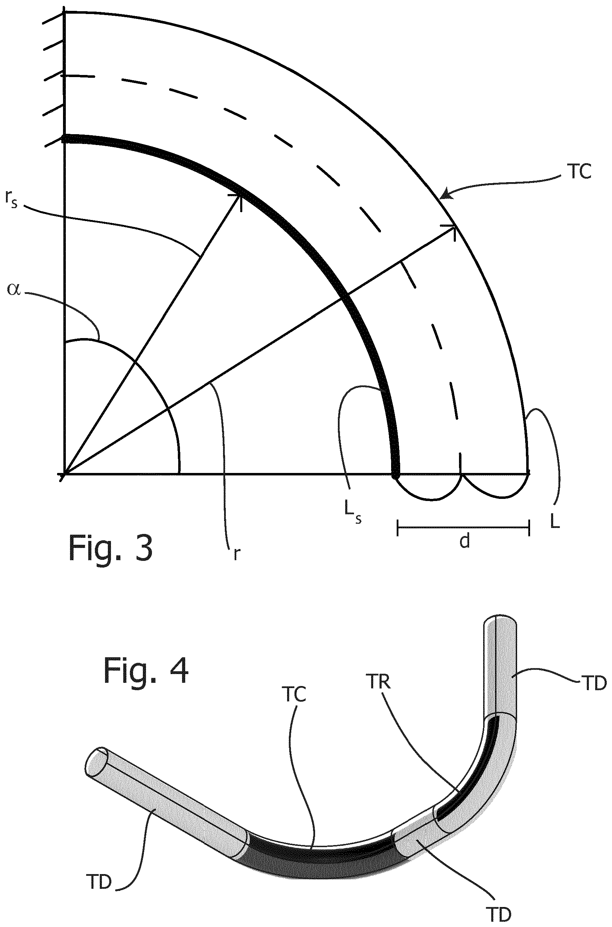

Reference can be made to figure 3 which represents a curved section TC having tubular structure R of the everting soft robot in figure 2. It is useful for showing the relationship of the radius of curvature of the tubular structure R which will give rise to the everting soft robot by pre-tensioning the fabric patches.

Let us consider, for simplicity, the planar case of the curved section TC:

Given $L_s$ the length of the patch at rest to which traction was applied so that, after gluing, its length, due to the elastic force, is less than the length L of the patch to which traction was not applied;
given $\alpha$ the angle of curvature;
given r and $r_s$ and d respectively the internal and external radii of the two fabric patches and the diameter of the tubular structure for the everting soft robot

$$L = \frac{\alpha}{360} 2\pi r$$

$$L_s = \frac{\alpha}{360} 2\pi r_s$$

$$r = r_s + d$$

$$r_s = \frac{360 L_s}{2\alpha\pi}$$

$$\alpha = \frac{360(L - L_s)}{2\pi d}$$

$$L = r\alpha$$

Therefore

$$L = L_s + \frac{2\pi\alpha d}{360}$$

$$r = \frac{L}{\alpha}$$

Then, the curvature defined as the ratio of $\alpha$ to L is:

$$\delta = \frac{\alpha}{L} = \frac{360}{2\pi dL} \frac{L - L_s}{L}$$

Therefore, the curvature of the tubular structure R of the everting soft robot is proportional to the difference between L and $L_s$, i.e. to the pre-tension of the patch with length L compared to that with length $L_s$. This pre-tension value can be easily linked to the pre-tension force applied to the section with length L (F) being known the elastic constant of the material used in the range of linear

behaviour:

$$(L - L_s) = F * k$$

Therefore, from the previous relations it is possible to link the radius of curvature to the pre-tension force, as the properties of the material used are known.

In the three-dimensional case, i.e. three patches at 120 degrees, the previous relations can be made explicit by defining the plane of curvature of the robot and calculating the combination of the three pre-tension forces applied to the three patches equivalent to the two forces of an equivalent planar robot lying on the plane of curvature, in a hypothetical case where the weight force is neglected.

Reference is made to figure 4 which is a perspective view of an example of a tubular structure for a part of the everting soft robot in figure 2. Imagine that, in the growth of the soft robot, the straight section TD covers the straight segment sd near the input I, the curvilinear section TC covers the subsequent curvilinear segment sc, the rectilinear section TD covers the subsequent rectilinear segment td, the axial rotation section TR covers the axial rotation segment in the space sr, and the section TD, final in figure 4, covers the straight segment sd in the path p in figure 1.

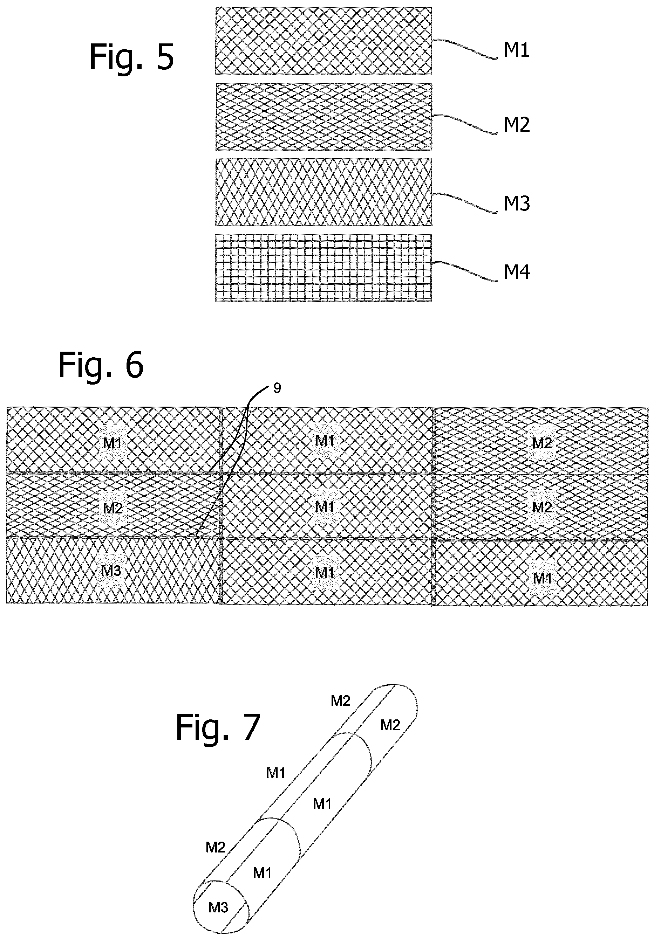

Each section TC, TD, TR is made up of elastic, airtight, silicone-coated and nylon-reinforced patches sewn longitudinally. The fabric patches, generically indicated with M, have different textures. Refer to figure 5, which is a schematic representation of four possible fabric patches that can be used to create the tubular structure for an everting soft robot according to the present invention. With M1 a fabric patch with a 45° reticular weave is shown, while with M4 a fabric patch with a 90° reticular weave between warp and weft is shown. No traction is applied to the patches M1 and M4. With M2 the patch with a 45° weave is shown, like M1, subjected to longitudinal traction, while with M3 the patch with a 45° weave, like M1, subjected to transversal traction is shown. It is important to avoid deformation of the patch in the direction orthogonal to the traction force, preferably by means of a system that keeps the patch blocked while under tension, or any mechanism that avoids sticking to a slightly curved patch.

Figure 6 is a schematic plan representation of an example of combination of three possible fabric patches in figure 5 that can be used to create the tubular structure for an everting soft robot according to the present invention. The three fabric patches, formed by M1, M2 and M3, are combined flat and joined laterally in the longitudinal direction and transversely, i.e. at the end. The result is a right ribbon, a central ribbon and a left ribbon. Subsequently, as shown in figure 7, which is an axonometric representation of the combination example of figure 6, with the final stitching of the end lateral edges, the tubular structure is obtained.

In figure 4 the fabric patches of the different sections are represented with different shades of grey: the sections TD are made up of fabric patches M1 and M4 not subjected to traction; the section TC is made up of a fabric patch M1 not subjected to traction and two patches M2 subjected to low longitudinal traction; and the section TR is formed by two patches M1 not subjected to traction and by a patch M3 subjected to transverse traction.

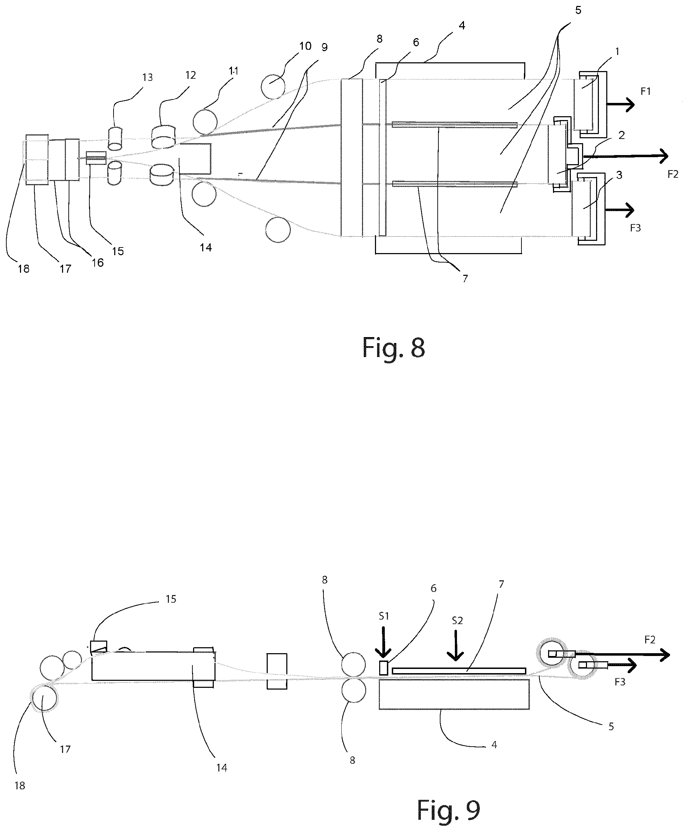

In the following, reference is made to figures 8 and 9, which are a schematic plan view and, respectively, a partially sectioned, side view of the apparatus for the creation of a tubular structure for an everting soft robot according to the present invention.

In figures 8 and 9, a roller on which the right fabric patch is wound is indicated as 1, a roller on which the central fabric patch is wound is indicated as 2, and a roller on which the left fabric patch is wound is indicated as 3. The rollers 1, 2 and 3 are able to be moved in the same plane to traction the fabric patches, indicated generically with 5. The fabric patches 5 rest on a flat base 4 adjacent to the rollers 1, 2, and 3.

Above the flat base 4 a guillotine 6 is used to block the three patches 5 before they are subjected to traction. Devices for gluing or welding the fabric of the patches 5 are indicated schematically as 7.

Guide rollers are marked with 8. The lines 9 indicate gluing or welding lines of the fabric. A first row 10, a second row 11, a third row 12 and, a fourth row 13 of guide rollers, respectively are shown. The guide rollers in the various rows are vertical and variously inclined to convey the fabric ribbons in order to obtain the tubular structure R.

To allow this, a cylindrical guide element 14 is used to create the tube shape of the everting soft robot.

Indicated as 15 is a gluing or welding device to complete the tubular shape for the everting soft robot, which through a guide roller 16 of the tubular shape reaches an exit coil 17 on which the tubular structure for the everting soft robot 18 is wound.

In figures 8 and 9, F1, F2, F3 indicate the forces applied to the three rollers 1, 2 and 3 in order to subject the fabric to traction for each section of the future everting soft robot, generating the different configurations.

The arrows S1 and S2 indicate the movement of the guillotine 6 and, respectively, of the gluing device 7.

It should be clear that what has been obtained is a tubular structure of fabric that must be turned inwards in order to be put into operation as an everting soft robot.

The procedure for creating the tubular structure for everting soft robots includes:

- the generation or reconstruction of the three-dimensional CAD model of the environment in which the everting soft robot must advance;
- the identification of the starting point, the objective point and the related obstacles;
- the generation of the optimal path of the robot to reach the objective point from the starting point while avoiding obstacles.

For this purpose, a planner must be provided which will generate a route consisting of:

- straight segments sd defined by the length of the path segment;
- curvilinear segments sc defined by the length of the path segment, the radius of curvature, and the normal to the plane in which the curve lies, indicating the direction of curvature and the sense of the curve;
- sr axial rotation segments capable of rotating in space around the axial direction characterized by the length of the path segment and the torsion angle in space.

For each sd, sc, sr segment to be covered, the traction to be applied to the different fabric patches making up the tubular structure for the everting soft robot is calculated, the specification of the weft and the distribution of patch types, M1, M2, M3, M4, along the outer surface of the soft robot tubular structure.

The parameters or characteristics are downloaded to the machine which performs the following assembly steps for each segment, to establish:

- the descent of the guillotine 6 to fix the fabric of all three patches on the terminal line s of the segment;
- subjecting the three patches to traction or tensioning by applying the forces F1, F2 and F3 as generated by the planner;
- the gluing or welding of the three patches together along the lines 9 with the devices 7 for the length of the segment;
- waiting for gluing;
- the advancement of the fabric along the length of the next segment by simultaneously rotating the exit roller 18 and the three entry rollers 1, 2, 3;
- closing the robot to obtain the tube shape and gluing by using the device 15.

**Claims**

1. A process for designing and manufacturing an everting soft robot, having a tubular structure formed by sections, the everting soft robot being capable of growing along a pre-programmed path, comprising the following steps:

   - generation or reconstruction of the three-dimensional CAD (Computer-Aided Design) model representing the environment in which the everting soft robot must navigate,
   - identification of a starting point, an end point and obstacles to be overcome, avoided or exploited by the everting soft robot,
   - generation of a path to reach the arrival point from the starting point avoiding the obstacles, the path including at least one of path straight segments (sd), curvilinear segments (sc) and axial rotation segments (sr),
   - design of tubular structure straight sections (TD), tubular structure curvilinear sections (TC) and tubular structure axial rotation sections (TR) corresponding to the straight segments (sd), curvilinear segments (sc) and axial rotation segments (sr), respectively,

   further **characterised by** the following steps:

   - choice between a plurality of first fabric patches (M1), second fabric patches (M2), third fabric patches (M3), and fourth fabric patches (M4) for each section of tubular structure,
   - subjecting each fabric patch to its own state of traction deriving from its weaving,
   - positioning or orienting each fabric patch in the tubular structure of the robot,
   - union of the plurality of fabric patches (M1, M2, M3, M4) on the basis of said design of the sections, capable of providing a determined tubular structure rectilinear section (TD), curvilinear section (TC) and axial rotation section (TR), so that the everting soft robot is adequate to follow this path during its growth.

2. The process according to claim 1, wherein said path straight segments (sd) are defined by the length of the segment, said path curvilinear segments (sc) are defined by segment length, radius of curvature, and the normal line to the plane in which lies the curve indicating the direction of curvature and the sense of the curve, and said path segments of axial rotation along the axial direction (sr) are defined by the length of the segment and the torsion angle in space.

3. The process according to claim 1, wherein said first fabric patches (M1) have a 45° weft weave without any state of traction, said second fabric patches (M2) have a 45° weft weave with a longitudinal traction state, said third fabric patches (M3) have a 45° weft weave with a vertical traction state, and said fourth fabric patches (M4) have a 90° weft weave without any traction state.

4. The process according to claim 1, wherein said plurality of first fabric patches (M1), second fabric patches (M2), third fabric patches (M3), and fourth fabric patches (M4) for each tubular structure section is three in number.

5. The process according to claim 1, **characterized in that** the process uses an apparatus configured for the realization of an everting soft robot having a tubular structure formed by rectilinear sections (TD), curvilinear sections (TC) and axial rotation sections (TR), so that the everting soft robot is adequate to complete a predetermined path during its growth, the apparatus comprising:

- a multiplicity of adjacent fabric reels (1, 2, 3) for feeding a corresponding plurality of fabric patches (5) (M1, M2, M3, M4) for each section of tubular structure, each patch (5) having its own state of traction deriving from its weaving and a position or orientation in the tubular structure of the robot, each reel of said multiplicity of fabric reels (1, 2, 3) being able to be subjected to longitudinal traction to impart the desired state of traction to the relative fabric patch (5);
- a flat base (4);
- an elongated pressing device (6), able to cooperate with said flat base (4) to block the plurality of fabric patches (5) before each reel of said multiplicity of reels (1, 2, 3) is subjected to longitudinal traction;
- a first joining device (7) for joining said fabric selected from the group comprising a gluing device and a device for sealing the fabric adapted to join a fabric patch (5) with the adjacent one;
- a multiplicity of successive pairs of guide rollers (10, 11, 12, 13) suitable for conveying the plurality of longitudinally joined fabric patches so that it assumes a tubular shape;
- a cylindrical guide element (14) adapted to improve the tubular shape of the plurality of longitudinally joined fabric patches;
- a second longitudinal joining device (15) for said fabric selected from the group comprising a gluing device and a fabric sealing device adapted to join the plurality of fabric patches joined longitudinally in a tubular shape along the opposite lateral ends;
- a pair of guide rollers (16) for the tubular structure for the everting soft robot; and
- a coil (17) for winding the everting soft robot.

6. The process according to claim 5, wherein said plurality of fabric patches (M1, M2, M3, M4) for each tubular structure section is three in number.

**Patentansprüche**

1. Verfahren zum Entwerfen und Herstellen eines umstülpbaren Soft-Roboters mit einer rohrförmigen Struktur, die von Abschnitten gebildet ist, wobei der umstülpbare Soft-Roboter in der Lage ist, entlang eines vorprogrammierten Pfads zu wachsen, umfassend die folgenden Schritte:

- Erzeugen oder Rekonstruieren des dreidimensionalen CAD (Computer-Aided Design)-Modells, das die Umgebung darstellt, in der der umstülpbare Soft-Roboter navigieren muss,
- Identifizieren eines Startpunktes, eines Endpunktes und von Hindernissen, die durch den umstülpbaren Soft-Roboter zu überwinden, zu vermeiden oder auszunutzen sind,
- Erzeugen eines Pfades, um den Ankunftspunkt vom Startpunkt aus zu erreichen, indem die Hindernisse vermieden werden, wobei der Pfad mindestens eines von geraden Pfadsegmenten (sd), gekrümmten Segmenten (sc) und axialen Rotationssegmenten (sr) einschließt,
- Entwerfen von geraden Abschnitten der rohrförmigen Struktur (TD), gekrümmten Abschnitten der rohrförmigen Struktur (TC) und axialen Rotationsabschnitten der rohrförmigen Struktur (TR), die den geraden Segmenten (sd), gekrümmten Segmenten (sc) bzw. axialen Rotationssegmenten (sr) entsprechen,

ferner **gekennzeichnet durch** die folgenden Schritte:

- Wählen zwischen einer Vielzahl von ersten Gewebestreifen (M1), zweiten Gewebestreifen (M2), dritten Gewebestreifen (M3) und vierten Gewebestreifen (M4) für einen jeden Abschnitt der rohrförmigen Struktur,
- Unterwerfen eines jeden Gewebestreifens seinem eigenen Zugzustand, der sich aus seinem Weben ergibt,
- Positionieren oder Orientieren eines jeden Gewebestreifens in der rohrförmigen Struktur des Roboters,
- Vereinigen der Vielzahl von Gewebestreifen (M1, M2, M3, M4) auf der Grundlage des Entwurfs der Abschnitte, die in der Lage sind, einen bestimmten geraden Abschnitt (TD), gekrümmten Abschnitt (TC) und axialen Rotationsabschnitt (TR) der rohrförmigen Struktur bereitzustellen, so dass der umstülpbare Soft-Roboter angemessen ist, um diesem Pfad während seines Wachstums zu folgen.

2. Verfahren nach Anspruch 1, wobei die geraden Pfadsegmente (sd) durch die Länge des Segments definiert sind, die gekrümmten Pfadsegmente (sc) durch die Segmentlänge, den Krümmungsradius und die normale Linie zur Ebene definiert sind, in der die Kurve liegt, die die Krümmungsrichtung und die Richtung der Kurve angibt, und die Pfadsegmente axialer Rotation entlang der axialen Richtung (sr) durch die Länge des Segments und den Torsionswinkel im Raum definiert sind.

3. Verfahren nach Anspruch 1, wobei die ersten Gewebestreifen (M1) eine 45°-Schussbindung ohne keinen Zugzustand aufweisen, die zweiten Gewebestreifen (M2) eine 45°-Schussbindung mit einem Längszugzustand aufweisen, die dritten Gewebestreifen (M3) eine 45°-Schussbindung mit einem vertikalen Zugzustand aufweisen und die vierten Gewebestreifen (M4) eine 90°-Schussbindung ohne keinen Zugzustand aufweisen.

4. Verfahren nach Anspruch 1, wobei die Vielzahl von ersten Gewebestreifen (M1), zweiten Gewebestreifen (M2), dritten Gewebestreifen (M3) und vierten Gewebestreifen (M4) für einen jeden rohrförmigen Strukturabschnitt drei an der Zahl ist.

5. Verfahren nach Anspruch 1, **dadurch gekennzeichnet, dass** das Verfahren eine Einrichtung verwendet, die für die Realisierung eines umstülpbaren Soft-Roboters mit einer rohrförmigen Struktur ausgelegt ist, die von geradlinigen Abschnitten (TD), gekrümmten Abschnitten (TC) und axialen Rotationsabschnitten (TR) gebildet ist, so dass der umstülpbare Soft-Roboter angemessen ist, um während seines Wachstums einen vorbestimmten Pfad zurückzulegen, wobei die Einrichtung Folgendes umfasst:

- eine Vielzahl von benachbarten Geweberollen (1, 2, 3) zum Zuführen einer entsprechenden Vielzahl von Gewebestreifen (5) (M1, M2, M3, M4) für einen jeden Abschnitt der rohrförmigen Struktur, wobei ein jeder Streifen (5) seinen eigenen Zugzustand aufweist, der sich aus seinem Weben und einer Position oder Orientierung in der rohrförmigen Struktur des Roboters ergibt, wobei eine jede Rolle der Vielzahl von Geweberollen (1, 2, 3) einer Längszugkraft ausgesetzt werden kann, um dem relativen Gewebestreifen (5) den gewünschten Zugzustand zu verleihen;
- eine flache Basis (4);
- eine längliche Pressvorrichtung (6), die in der Lage ist, mit der flachen Basis (4) zusammenzuwirken, um die Vielzahl von Gewebestreifen (5) zu blockieren, bevor eine jede Rolle der Vielzahl von Rollen (1, 2, 3) einer Längszugkraft ausgesetzt wird;
- eine erste Zusammenfügungsvorrichtung (7) zum Zusammenfügen des Gewebes, die aus der Gruppe ausgewählt ist, die eine Klebevorrichtung und eine Vorrichtung zum Versiegeln des Gewebes umfasst, die dazu angepasst ist, einen Gewebestreifen (5) mit dem benachbarten zusammenzufügen;
- eine Vielzahl von aufeinanderfolgenden Paaren von Führungswalzen (10, 11, 12, 13), die geeignet sind, die Vielzahl von in Längsrichtung zusammengefügten Gewebestreifen so zu befördern, dass sie eine rohrförmige Form einnimmt;
- ein zylindrisches Führungselement (14), das angepasst ist, um die rohrförmige Form der Vielzahl von in Längsrichtung zusammengefügten Gewebestreifen zu verbessern;
- eine zweite Längszusammenfügungsvorrichtung (15) für das Gewebe, die aus der Gruppe ausgewählt ist, die eine Klebevorrichtung und eine Gewebeversiegelungsvorrichtung umfasst, die angepasst ist, um die Vielzahl von Gewebestreifen zusammenzufügen, die in Längsrichtung in einer rohrförmigen Form entlang der gegenüberliegenden seitlichen Enden zusammengefügt sind;
- ein Paar von Führungswalzen (16) für die rohrförmige Struktur für den umstülpbaren Soft-Roboter; und
- eine Spule (17) zum Wickeln des umstülpbaren Soft-Roboters.

6. Verfahren nach Anspruch 5, wobei die Vielzahl von Gewebestreifen (M1, M2, M3, M4) für einen jeden rohrförmigen Strukturabschnitt drei an der Zahl ist.

**Revendications**

1. Procédé de conception et de fabrication d'un robot souple d'éversion, ayant une structure tubulaire formée de sections, le robot souple d'éversion étant capable de croître le long d'une trajectoire préprogrammée, comprenant les étapes suivantes :

- générer ou reconstruire le modèle de CAO (Conception Assistée par Ordinateur) tridimensionnel représentant l'environnement dans lequel le robot souple d'éversion doit naviguer,
- identifier un point de départ, un point d'arrivée et des obstacles à surmonter, éviter ou exploiter par le robot souple d'éversion,
- générer une trajectoire pour atteindre le point d'arrivée à partir du point de départ en évitant les obstacles, la trajectoire incluant au moins un des segments rectilignes (sd), des segments curvilignes (sc) et des segments de rotation axiale (sr) de trajectoire,
- concevoir des sections rectilignes (TD) de la structure tubulaire, des sections curvilignes (TC) de la structure tubulaire et des sections de rotation axiale (TR) de la structure tubulaire correspondant, respectivement, aux segments rectilignes (sd), aux segments curvilignes (sc) et aux segments de rotation axiale (sr),

**caractérisé en outre par** les étapes suivantes :

- choisir entre une pluralité de premières pièces de tissu (M1), de deuxièmes pièces de tissu (M2), de troisièmes pièces de tissu (M3) et de quatrièmes pièces de tissu (M4) pour chaque section de la structure tubulaire,

- soumettre chaque pièce de tissu à son propre état de traction résultant de son tissage,

- positionner ou orienter chaque pièce de tissu dans la structure tubulaire du robot,

- unir la pluralité de pièces de tissu (M1, M2, M3, M4) sur la base de ladite conception des sections, capable de fournir une section rectiligne (TD), une section curviligne (TC) et une section de rotation axiale (TR) de la structure tubulaire déterminées, de sorte que le robot souple d'éversion est approprié pour suivre cette trajectoire au cours de sa croissance.

2. Procédé selon la revendication 1, dans lequel lesdits segments de trajectoire rectilignes (sd) sont définis par la longueur du segment, lesdits segments de trajectoire curvilignes (sc) sont définis par la longueur du segment, le rayon de courbure et la ligne normale au plan dans lequel repose la courbe indiquant la direction de la courbure et le sens de la courbe, et lesdits segments de trajectoire de rotation axiale le long de la direction axiale (sr) sont définis par la longueur du segment et l'angle de torsion dans l'espace.

3. Procédé selon la revendication 1, dans lequel lesdites premières pièces de tissu (M1) ont un tissage de trame à 45° sans aucun état de traction, lesdites deuxièmes pièces de tissu (M2) ont un tissage de trame à 45° avec un état de traction longitudinale, lesdites troisièmes pièces de tissu (M3) ont un tissage de trame à 45° avec un état de traction verticale, et lesdites quatrièmes pièces de tissu (M4) ont un tissage de trame à 90° sans aucun état de traction.

4. Procédé selon la revendication 1, dans lequel ladite pluralité des premières pièces de tissu (M1), des deuxièmes pièces de tissu (M2), des troisièmes pièces de tissu (M3) et des quatrièmes pièces de tissu (M4) pour chaque section de structure tubulaire est au nombre de trois.

5. Procédé selon la revendication 1, **caractérisé en ce que** le procédé utilise un appareil configuré pour la réalisation d'un robot souple d'éversion ayant une structure tubulaire formée par des sections rectilignes (TD), des sections curvilignes (TC) et des sections de rotation axiale (TR), de sorte que le robot souple d'éversion est approprié pour compléter une trajectoire prédéterminée au cours de sa croissance, l'appareil comprenant :

- une multiplicité de bobines de tissu (1, 2, 3) adjacentes pour alimenter une pluralité correspondante de pièces de tissu (5) (M1, M2, M3, M4) pour chaque section de la structure tubulaire, chaque pièce (5) ayant son propre état de traction dérivant de son tissage et d'une position ou orientation dans la structure tubulaire du robot, chaque bobine de ladite multiplicité de bobines de tissu (1, 2, 3) pouvant être soumise à une traction longitudinale pour conférer l'état de traction désiré à la pièce de tissu (5) correspondante ;

- une base plate (4) ;

- un dispositif de pressage allongé (6), capable de coopérer avec ladite base plate (4) pour bloquer la pluralité de pièces de tissu (5) avant que chaque bobine de ladite multiplicité de bobines (1, 2, 3) ne soit soumise à une traction longitudinale ;

- un premier dispositif d'assemblage (7) servant à assembler ledit tissu, choisi dans le groupe comprenant un dispositif d'encollage et un dispositif de scellage du tissu adapté pour assembler une pièce de tissu (5) à celle adjacente ;

- une multiplicité de paires successives de rouleaux de guidage (10, 11, 12, 13) aptes à transporter la pluralité de pièces de tissu assemblées longitudinalement de façon à ce qu'elle prenne une forme tubulaire ;

- un élément de guidage cylindrique (14) adapté pour améliorer la forme tubulaire de la pluralité de pièces de tissu assemblées longitudinalement ;

- un second dispositif d'assemblage longitudinal (15) pour ledit tissu, choisi dans le groupe comprenant un dispositif de collage et un dispositif de scellage du tissu, adapté pour assembler la pluralité de pièces de tissu assemblées longitudinalement dans une forme tubulaire le long des extrémités latérales opposées ;

- une paire de rouleaux de guidage (16) pour la structure tubulaire du robot souple d'éversion ; et

- un serpentin (17) pour enrouler le robot souple d'éversion.

6. Procédé selon la revendication 5, dans lequel ladite pluralité de pièces de tissu (M1, M2, M3, M4) pour chaque section de structure tubulaire est au nombre de trois.

Fig. 1

Fig. 2

Fig. 3

Fig. 4

Fig. 5

M1

M2

M3

M4

Fig. 6

Fig. 7

Fig. 8

Fig. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021072295 A1
- US 10954789 B
- WO 2022043670 A1
- US 2019143539 A1
- US 6171424 B1
- US 6045890 A